# EUROPEAN PATENT APPLICATION

(11) **EP 0 984 627 A1**
(43) Date of publication of application: **08.03.2000**
(21) Application number: 99938028.0
(22) Date of filing: 05.03.1999
(51) Int. Cl.: H04N 5/445, H04N 5/44, H04L 12/28, G06F 13/00, G06F 3/00

(54) **NETWORK CONTROL SYSTEM, DEVICE FOR NETWORK CONTROL SYSTEM, AND CONTROLLER**

(30) Priority: 05.03.1998 JP 5320398
(71) Applicant: MATSUSHITA ELECTRIC INDUSTRIAL CO., LTD., Kadoma-shi, Osaka 571-8501 (JP)
(72) Inventor: YANAGAWA, Yoshifumi, Kyoto-shi, Kyoto 607-8345 (JP)
(74) Representative: Kügele, Bernhard
(86) International application number: JP9901069
(87) International publication number: WO9945699

(57) **Abstract**

In an AVC system formed by connecting via a transmission line a plurality of equipment that handles any one or more of data on video, audio or information and also includes a device and a controller, the device has at least one display component to configure an operation picture and a control code corresponding to the display component, and the controller reads from the device a display component and a control code and displays the display component on a display screen and, when the user operates the display component on the display screen, the controller transmits a control code corresponding to the display component and the operation information thereof to the device, which executes the function indicated by the display component according to the control code and operation information received from the controller, thereby enabling the realization of an operation environment, which is easy for the user to understand, with a simple configuration and further making it possible to cope readily with a device having a new function that can not be thought of at present.

## Description

### FIELD OF THE INVENTION

The present invention relates to a network control system for controlling equipment connected to a network to operate though the network and particularly relates to an equipment control system utilizing a graphical user interface (GUI) in assisting the user to operate the equipment by means of graphics (icons), letters and the like that appear on a display screen.

### BACKROUND OF THE INVENTION

In recent years, an equipment control system, whereby graphics (icons) formed of image display data, letters and the like to indicate the function of equipment connected to a network are displayed on a television screen and the graphics on the screen are operated by selection though a remote controller to control the equipment, has been coming along on the market. Also coming along on the market is a network system, whereby video/audio data are transmitted/received with such digital equipment as DVC (Digital Video Cassette), TV and the like hooked up through the use of IEEE1394-1995, which is a digital interface.

There is a conventional network control system as disclosed in the Japanese Unexamined Patent Publication, TOKKAIHEI 9-149325, for example.

A network control system according to the above TOKKAIHEI 9-149325 is described below as a typical conventional network control system.

A variety of AV equipment (such as a device, controller and the like) are connected with a variety of other AV equipment without relying on a switching operation between the variety of AV equipment though a serial bus where equal communication opportunities are provided periodically by a two-way packet communication mode as in a digital interface according to such standards as IEEE1394 and the like.

Here, each respective AV equipment (device) has its own image display data stored in itself while a controller being also one of the AV equipment and having a graphic display function and transmits the image display data according to a request from the controller (television receiver) and then the controller displays data for image display.

Also, a controller has a function of inquiring about data needed in displaying AV equipment (device) hooked up therewith via the aforementioned serial bus and also a function of controlling a display screen according to an image display data received from the AV equipment.

A device, which is also one of AV equipment, has a recording medium for storing image display data and a function of selecting an appropriate image display data against an inquiry about the image display from a controller.

With the network control system thus configured, each respective device has image display data stored and outputted upon receiving a request for displaying from a controller (a television receiver, for example), thereby displaying its own graphics on the controller's display screen for controlling each respective device.

However, with the configuration as described in the above, no information on the device's control method is disclosed and, although a controller can display the information on a device, there has been a problem of difficulties in controlling the device.

In addition, the image display data is intended for exclusive use of each respective AV equipment, resulting in a problem of lacking flexibility on the part of a controller at the time of image displaying.

Furthermore, since AV equipment (device) selects an appropriate image display data against an inquiry from a controller relative to image display data, a problem of imposing an excessive load on AV equipment has been created.

### DISCLOSURE OF THE INVENTION

The present invention deals with the foregoing problems and discloses a network control system and a configuration thereof, whereby an operating environment suitable for each respective function and equipment can be formed with a simple configuration, controlling of each respective equipment and function can be easily performed and also a new function, which can not be thought of at present, can be easily handled.

### BRIEF DESCRIPTION OF THE DRAWINGS

Fig. 1 is a block diagram of a device in a network control system of the present invention.
Fig. 2 is a block diagram of a controller in a network control system of the present invention.
Fig. 3 shows a system configuration of a typical network control system of the present invention.
Fig. 4 is a diagram to describe an example of function information in a first exemplary embodiment of the present invention.
Fig. 5 is a diagram to describe a network control system in the first exemplary embodiment of the present invention.
Fig. 6 is a diagram to describe an example of a transmission packet in the first exemplary embodiment of the present invention.
Fig. 7 is a diagram to describe an example of function information when pseudo-moving images are used in the first exemplary embodiment of the present invention.
Fig. 8 is a diagram to describe an example of function information when a host memory area is used in the first exemplary embodiment of the present invention.
Fig. 9 is a diagram to describe a case, where a reference object is used in function information, in a second exemplary of the present invention.
Fig. 10 is a diagram to describe a case, where a plurality of reference objects are used in the function information, in the second exemplary of the present invention.
Fig. 11 is a diagram to describe an example of configuring a slider in the function information in the second exemplary embodiment.
Fig. 12 is a diagram to describe an example of a user selection display component in function information in a third exemplary embodiment of the present invention.
Fig. 13 is a diagram to describe an example of a user definition display component in function information in a fourth exemplary embodiment of the present invention.
Fig. 14 is a diagram to describe an example of a plurality of menus in function information in a fifth exemplary embodiment of the present invention.
Fig. 15 is a diagram to describe an example of a layered menu in the function information in the fifth exemplary embodiment of the present invention.

### DETAILED DESCRIPTION OF PREFERRED EMBODIMENTS

Next, a description is given to a network control system in an exemplary embodiment of the present invention with reference to drawings.

### (First Exemplary Embodiment)

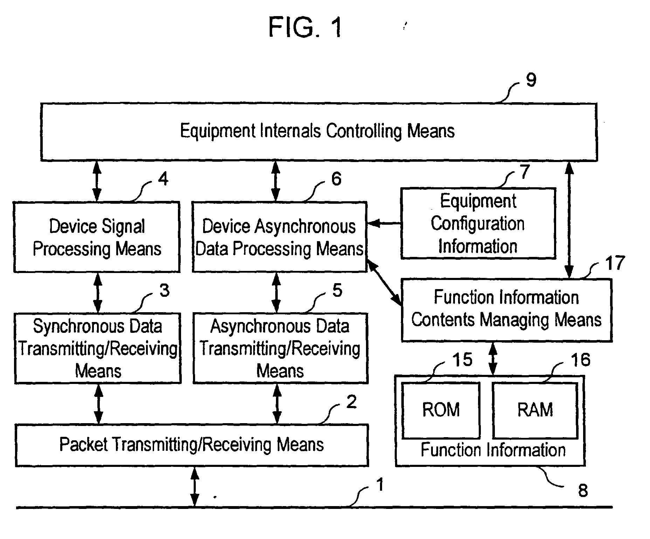

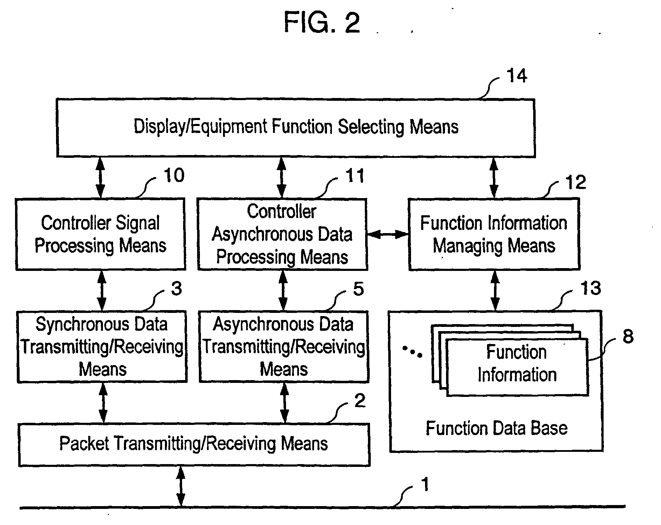

Fig. 1 is a block diagram of a device in a network control system in a first exemplary embodiment of the present invention. Fig. 2 is a block diagram of a controller in the network control system in the first exemplary embodiment of the present invention. Next, a description is made on the configuration and operation of the network control system in the first exemplary embodiment of the present invention with reference to Fig. 1 and Fig. 2.

In the present specification, the term "device" is used to mean an object to be controlled and the term "controller" is used to mean what controlls the object to be controlled. In a unit of equipment, there may be both the device and controller or only any one of the device and controller.

The equipment is what corresponds to a node of a transmission line and a unit is allowed to be configured by having a plurality of nodes provided in a single housing.

In Fig. 1, a transmission line 1 is a serial bus (1394 bus) as specified in accordance with the IEEE1394 Standards (IEEE1394-1995 or a compatible higher level standard), for example. Further, the transmission line 1 is not necessarily required to be the 1394 bus but such other transmission lines as an ATM, Ethernet, infrared transmission line and the like can also be used.

Also, a packet transmitting/receiving means 2 establishes a physical and electrical interface with the transmission line 1, reconciles the right to use a bus, performs cycle control for a synchronized transfer and does some other things.

Further, the packet transmitting/receiving means 2 selectively receives packets on the trnasmission line 1 according to address and transmits packets to the transmission line 1.

A synchronous data transmitting/receiving means 3 manages a transfer rate (division of data) and adds a header when transmission is performed. For example, when an AV protocol standard for the 1394 bus (IEC61883) is used, the synchronous data transmitting/receiving means 3 adds a CIP (Common Isochronous Packet) header. Conversely, when data reception is performed, the synchronization transmitting/receiving means 3 arranges received packets in a correct sequence, eliminates headers and does some other things.

A device signal processing means 4 receives synchronous data from the synchronous data transmitting/receiving means 3 and performs signal processing corresponding to a device. For example, when the device is recording/reproducing equipment such as a digital VCR and the like, a synchronous data is recorded on a recording medium (a magnetic tape, for example). Also, the device signal processing means 4 takes out a synchronous data from a recording medium, broadcast signal and the like and transmits the synchronous data to the synchronous data transmitting/receiving means 3.

An asynchronous data transmitting/receiving means 5 performs transaction processing of asynchronous data according to the protocol of the transmission line 1. For example, in the case of the 1394 bus, read transaction processing, write transaction processing, lock transaction processing and the like are performed. The asynchronous data transmitting/receiving means 5 is also allowed to be configured with software. A device asynchronous data processing means 6 processes asynchronous data received from the asynchronous transmitting/receiving means 5 and transmits the processed asynchronous data to an appropriate composing element in the device.

For example, if an asynchronous data received by the device asynchronous data processing means 6 includes a control code and operation information of the user, the validity thereof is examined and, when the examination results in the affirmative, a directive is given to an equipment internals controlling means 9 for performing a function corresponding to this control code and the user's control code.

When equipment configuration information 7 is requested by a controller, the device asynchronous data processing means 6 sends out the information included in the equipment configuration information 7 in accordance with the requirement received via the asynchronous transmitting/receiving means 5 and the like to the controller via the asynchronous data transmitting/receiving means 5 and the like.

Based on a directive from the equipment internals controlling means 9, the device asynchronous data processing means 6 also sends out asynchronous data to the asynchronous data transmitting/receiving means 5 from composing elements in the device.

Here, the asynchronous transmitting/receiving means 5 and device asynchronous date processing means 6 are allowed to be built into a single means.

The information relative to an equipment configuration accommodated in the equipment configuration information 7 provides information on how equipment is configured. The foregoing information is described, for example, in accordance with the rule indicated by a configuration ROM of CSR (Command and Status Registers) presented in the ISO/IEC13213:1994 Standards and, when a 1394 bus is used, the foregoing information includes bus information, which the equipment deals with to see whether or not a bus manager and isochronous performance are supported, a unit directory including information on whether or not an AV protocol is supported, a unique ID as an identification data of the equipment and the like. In the foregoing equipment configuration information 7 is also included a leading address of ROM15 to indicate the whereabouts of function information 8.

The function information 8 is a listing of information that configures an operation picture of the device. The function information 8 includes an object needed in operating the device, an identification data (ID) to identify the foregoing object and the like.

Each respective object has a layered structure of a list format and each respective display component and information and even the list itself are all together referred to as an object in the present specification.

Here, the display component refers to a still picture data of control buttons of the equipment and the like, a character data (text data) indicating functions and the like, an audio data such as sound effects and the like, a program code including such display components as a still picture data, a character data (text data) and the like, and more specifically refers to icons and the like, for example.

A display component data is what is obtained by having display components made a data and more specifically corresponds to a bit map data of picture and the like.

The information obtained from the function information 8 is transferred according to the requirement of a controller on the transmission line 1 to the controller via the device asynchronous data processing means 6, asynchronous data transmitting/receiving means 5 and the like.

The function information 8 is placed in ROM15 and RAM16, and what is stored in the ROM15 is the information that is specific to the device, not requiring rewriting frequently and exemplified by an object such as a still picture and the like symbolically showing control buttons of equipment.

The ROM15 is also allowed to be formed of a flash ROM and the function of the equipment itself can be rewritten in this case.

The controller on the transmission line 1 (not shown in Fig. 1) and the equipment internals controlling means 9 write an object in the RAM16, where the function information 8 is located, via a function information contents managing means 17 as it is required. The information written in here is contents information, status information and the like.

What is referred to as the contents information here is the information on the programs that are being broadcast (program title, title picture, theme music, outline, performers and the like) in the case where the device is an STB(Set Top Box), for example. In the case of a DVD, the contents information is the information on the contents (title, title picture, theme music, outline, performers and the like) recorded on a DVD disc.

The status information as mentioned above is an object such as a display component and the like including the status of equipment (playing, rewinding and recording being programmed) in the case of VCR, for example. In addition, the information needed in network controlling such as identification information and the like of the controller that is in use with the device, the date, time and channel number for programmed recording and the like is allowed be written in here.

A function information contents managing means 17 is intended for performing a conversion between the identification data of an object and the address of ROM15 or ROM16.

Not only a conversion of the address is performed but also a new address is allocated when writing in the original address location can not be made because the data size has become excessively large after a certain display component is converted in writing, for example.

Accordingly, the controller on the transmission line 1 is allowed to read and write each respective object by means of the ID thereof by using the equipment internals controlling means 9 and device asynchronous data processing means 6.

On the other hand, when the controller knows the address of each respective object and the like, writing and reading can be performed by using the address of ROM15 or ROM16.

Furthermore, the controller is allowed to read and write display components and the like by combining the above pieces of information and also allowed to read and write by means of a relative address in a display component as indicated by an ID.

The function information contents managing means 17 controls object ID's and assigns, for example, an ID, which does not duplicate with the ones for other objects, to a newly added object and conversely invalidates an ID when an object assigned with the ID is erased.

When a display component is changed, the function information contents managing means 17 can also be configured to have the information on the changed display component (an ID of an object or an ID and an object itself) transmitted to the controller, thereby making it unnecessary for the controller to watch all the time an object that is likely to change and making it possible for the controller to reduce a processing load. Accordingly, the controller can easily cope with the situations, in which an object shows ceaselessly changing status information and contents information.

The equipment internals controlling means 9 controls each respective composing element of the device including the internal mechanism and the like thereof and, in case where the data received by the device asynchronous data processing means 6 is a control code and the like that indicate the operating status of the device, the equipment internals controlling means 9 makes each respective composing element of the device operate according to the directive from the device asynchronous data processing means 6.

The operational behavior of the device against the requirement and the like from the controller is as follows:
When the device is hooked up with the transmission line 1 or the controller is hooked up with the transmission line 1, the controller reads equipment configuration information from the equipment configuration information 7 of the device, confirms the whereabouts of the function information 8 and reads the function information 8.

The equipment configuration information 7 is allowed to be configured in such a way as having no address information of the function information 8 and indicating only the existence of the function information 8 or to be configured to have no information of the function information 8. At this time, the controller issues a command of requesting the function information 8 to the device, thereby obtaining information of the function information 8.

At this time, the controller is also allowed to be configured in such a way as obtaining part of the function information 8 such as a display component and the ID thereof only by issuing a command to obtain the foregoing display component.

When the device has obtained a control code (such as an ID of an object) and user's operation information from the controller, the processing as indicated by the foregoing control code and user's operation information is performed according to the situations involved.

However, when a control code of an object, for example, is transmitted together with user's operation information "selection" from the controller against an object of the display component indicating a device's certain function, the asynchronous data transmitting/receiving means 5 issues a directive requesting an execution of the function indicated by the object to the equipment internals controlling means 9.

Thus, what is required of the device is just an indication of the function information 8 against the requirement of GUI (Graphical User Interface) information from the controller, thereby allowing the load imposed on the device to be reduced.

It is not necessary to specify the command according to a standardization function and the like relative to each respective function of the device, and utilization of a new function via the transmission line 1 becomes possible readily against a device having the new function that can not be thought of at this moment.

Such composing elements as the synchronous data transmitting/receiving means 3, device signal processing means 4 and the like is allowed to be configured by making a selection arbitrarily according to the function of the device or to be eliminated entirely.

Each respective means might be formed of any one selected from hardware and software. The function of the device is specified according to user's operation information and also according to a control code of an object in the present exemplary embodiment but it is also possible for the object's control code to be configured in such a way as not approving anything other than "selection" as the users operation, thereby enabling the device to perform the function thereof according to a control code only with a resulting contribution to a reduction in size of the packet to be transmitted since the device's function can be specified only by a control code (an object ID, for example) against the object.

An object ID is used as a control code in the present exemplary embodiment and on the other hand the control code is allowed to be set up arbitrarily by the device. For example, a control code can be configured by a number assigned to each respective kind of device's function and a serial number in each respective kind of device's function or can be configured by a unique control code used in the device, thereby facilitating the provision of each respective function in the device.

In the case of a program, in which a display component includes a display element such as a still picture data and the like, an ID of the program can be used as the control code.

Fig. 2 is a block diagram of the controller in the network control system of the present exemplary embodiment. By assigning the same reference numerals to the same composing elements of Fig. 1 as used in Fig. 2, the descriptions of such composing elements are omitted.

A controller signal processing means 10 receives a synchronous data from a synchronous data transmitting/receiving means 3 and performs signal processing as required by the controller.

For example, in case where the controller is image display equipment such as a video monitor and the like, a synchronous data (an MPEG stream, for example) is decoded and displayed on a display screen.

A controller asynchronous data processing means 11 processes an asynchronous data received from an asynchronous data transmitting/receiving means 5 and transfers the processed data to an appropriate composing element in the controller.

The controller asynchronous data processing means 11 also receives such information of a device on a transmission line 1 as a connection of a new device, an elimination of an already-existing device and the like and device's function information 8 and the like from a packet transmitting/receiving means 2 via the asynchronous data transmitting/receiving means 5, and transfers the received information to a function information managing means 12.

Further, the controller asynchronous data processing means 11 sends out an asynchronous data from composing elements in the controller to the asynchronous data transmitting/receiving means 5 according to a directive from a display/equipment function selecting means 14.

Here, the asynchronous data transmitting/receiving means 5 and controller asynchronous data processing means 11 are allowed to be combined into an integrated one-piece means.

When a controller and a device exist in the same equipment, the function performed by the device in the equipment is recognized by the controller and, since controlling in the equipment is performed directly by an equipment internals controlling means 9, the device's function is not registered with a function data base 13 in the equipment although the equipment with the controller and device provided together has the function information 8.

Alternatively, the function information 8 may have the whereabouts thereof entered in the foregoing equipment configuration information 7 and also registered before hand in the function data base 13.

When a controller and a device exist in the same equipment, the controller signal processing means 10 and device signal processing means 4 can be combined into an integrated one-piece means and also the controller asynchronous data processing means 11 and device asynchronous data processing means 6 can be combined into an integrated one-piece means.

The function information managing means 12 controls the function information 8 received from a device on the transmission line 1 and, upon receiving information that a new device is hooked up from the controller asynchronous data processing means 11, a directive that the new device's function information 8 should be entered is issued to the controller asynchronous data processing means 11. Upon entering the new device's function information 8, this function information 8 is registered with the function data base 13.

Upon receiving information that an already-existing device on the transmission line 1 is removed and the like, the function information managing means 12 deletes the corresponding function information 8 from the function data base 13.

When the already-existing device is removed, an arrangement is made in configuration to maintain the device's function information 8 in a storage means in a controller instead of deleting the device's function information 8 and, whenever the device is hooked up again, this device is recognized by the device's identification data and the like and the function information 8 is retrieved from the storage means in the controller and can be registered with the function data base 13, thereby enabling the registration of connected equipment to be performed quickly.

The function data base 13 is provided in a rewritable memory space and configured with the function information 8 received from a device serving as a data base. By browsing this data base with the use of the function information managing means 12, it becomes possible to retrieve objects such as information on each respective device, information on each respective function and the like, ID's corresponding to the objects, a display component to inform the user of the objects, a display component to be displayed when the user operates the display component, a control code to be transmitted (an object ID assigned by the device, for example) and the like.

Other than what is mentioned in the above, the function data base 13 does not necessarily have to possess all the function information 8 at all times and it suffices that a needed portion only is to be possessed.

The display/equipment function selecting means 14 informs the user of the display components (such as video/audio/character information and the like) indicating GUI information of a device and GUI information of a function and the like on a display screen of a controller and also issues a directive to select a device and a function and to execute each respective function according to user's operation.

Further, the display/equipment function selecting means 14 issues a directive to the function information managing means 12 to browse the function information 8, thereby displaying on a screen a device on the transmission line 1 and display components (name of device, name of function, still picture for display and the like) indicating the device's function. When the user selects a display component indicating a function, this display component is replaced with the display component obtained from the function information 8 at the time of selection, and by displaying on the screen accordingly the user knows that a selection has been made, thereby allowing the operation by the user to be facilitated.

In addition, the display/equipment function selecting means 14 issues a control code and user's operation information corresponding to the display component obtained from the function information 8 against the device via the controller asynchronous data processing means 11 and the like. Furthermore, the display/equipment function selecting means 14 receives the control code, device's response to the user's operation information and status information of the instructed device via the controller synchronous data processing means 11 and obtains a display component appropriate to the device's status and the like from the function information 8 and displays on a screen accordingly, thereby so informing the user.

In this case, the controller does not necessarily understand each respective function of the device. For example, in case where the device may have a new function that can not be thought of at present, the controller takes out display components against the new function from the function information 8 and displays on a screen accordingly, thereby allowing the user to be so informed. Through these display components, the user understands the new function and, when this function is selected, the display/equipment function selecting means 14 of the controller obtains a control code corresponding to the new function with reference to the function information 8 and issues the control code and user's operation information against the device, thus enabling the device to perform the new function. Accordingly, the configuration as described in the above enables the user to perform a new function that can not be thought of at present.

Such composing elements as the synchronous data transmitting/receiving means 3, controller signal processing means 10 and the like can be configured by making a selection arbitrarily according to the function of a controller or can be eliminated entirely.

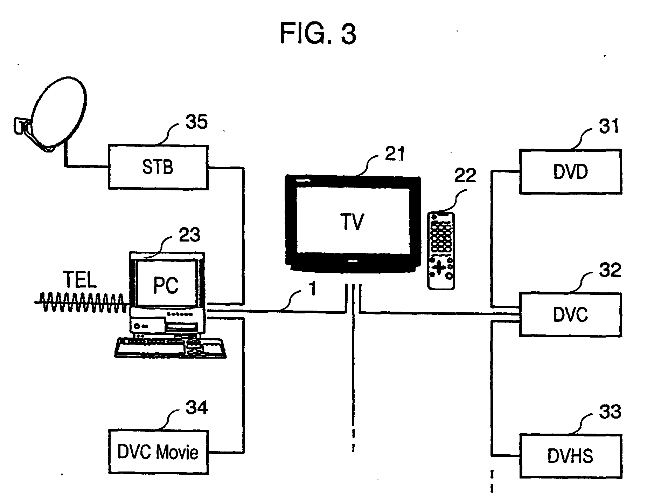

Fig. 3 shows a system configuration of a network control system in the present exemplary embodiment.

In Fig. 3, a television receiver 21, a remote controller 22 for television receiver, a personal computer (PC) 23, a recordable/reproducible DVD 31, a DV system digital VCR (DVC) 32, a VHS system digital VCR (DVHS) 33, a DV system digital movie (DVC movie) 34 and a set top box (STB) 35 for CS digital broadcast and the like are typical examples of the equipment that deals with data on video, audio or information and are collectively called video/audio/information equipment in this specification. These pieces of video/audio/information equipment are hooked up to a transmission line 1, thereby structuring an AVC system. The video/audio/information equipment includes not only the equipment as mentioned above but also all the equipment in respective areas of video, audio and information now in use (such as a printer, a minidisc player, a minidisc recorder and the like, for example) and also the equipment emerging in future.

Here, the television receiver 21 is equipment formed of a controller and a device (such as a terrestrial wave tuner, video monitor and the like) and the user gives a directive to the display/equipment function selecting means 14 by using a remote controller. The PC 23 is equipment formed of a controller and a device (a modem for interfacing to telephone line, video monitor and the like) and the user gives a directive to the display/ equipment function selecting means 14 by using a keyboard, mouse and the like.

The television receiver 21 and PC23 are defined as equipment, in which the device is integrated with the controller, and a function out of the functions of the device internal to the equipment is entered in the function information 8 when the function is accessible for use from other equipment and not registered with the function data base 13 of the controller internal to the equipment although the function belongs to the equipment itself. Further, the television receiver 21 and PC23 are defined as the equipment formed of a device and a controller, respectively, and in possession of the function information 8 of each respective device internal to the equipment, and each respective piece of the function information 8 internal to the equipment can be registered with the function data base 13 of the controller internal to the equipment.

The 31 and DVC movie 34 are, respectively, a device whereby AV data can be recorded/reproduced. The DVC 32 and DVHS33 are, respectively, equipment formed of a device whereby AV data can be recorded/reproduced and a device having a digital broadcast tuner function.

The STB35 is a device having a tuner function to receive a CS digital broadcast.

In the foregoing, although the DVD31, DVC32, DVHS33, DVC movie 34 and STB35 are referred to as a device, respectively, these devices can be called equipment including a controller and a device, respectively, when each respective device is provided with an environment where other devices can be operated by the help of a liquid crystal panel and the like even if the size of the device is small and capable of performing operations such as allowing the user to select the function of other devices and the like by using a touch panel, remote controller and the like.

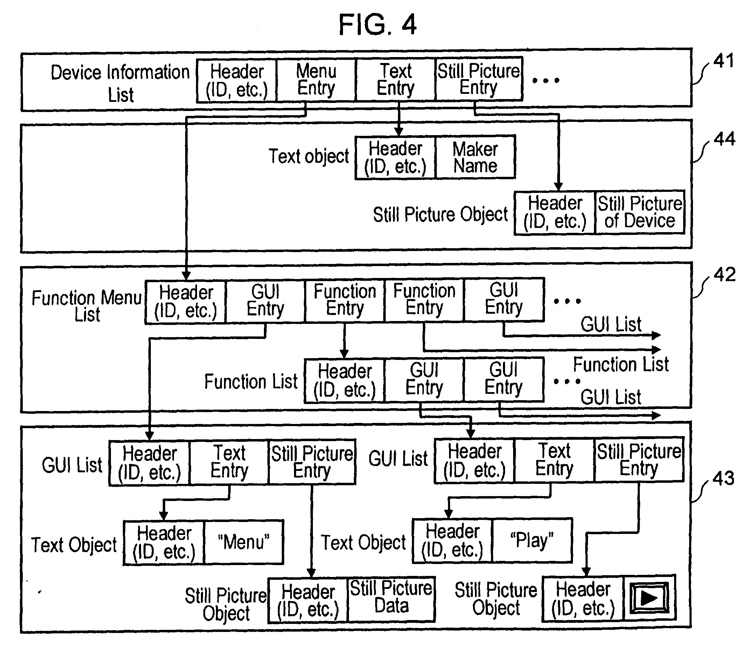

Furthermore, it is also possible for each respective equipment of above to have a processing function as a controller and also a remote controller for the equipment, thereby having a display and a voice only displayed on a monitor with analog wire connections and the like and allowing the user to perform operations by the use of the remote controller of the equipment while watching the monitor screen. Fig. 4 is a diagram to describe the function information 8 in the present exemplary embodiment.

As shown in Fig. 4, the function information 8 is mainly formed of two layers of a device information layer 41 and a function information layer 42 and further a device GUI layer 44 is attached to the device information layer 41 and a function GUI layer 43 is attached to the function information layer 42.

Each respective layer is formed of an object in a list form, and a data object (such as a text object, still picture object and the like) having no sub-object and a list together are generally referred to as an object.

Each respective object has an identification data (ID) to identify an object from others, type information to indicate a type of object, attribute information to describe such a configuration as having a sub-object and the like or not, size information to show a size of object, and the like in a header segment. Each object indicates a sub-object by ID information in the entry as carried in the list.

In addition, when an object is small in data quantity like a text object and the like, the object itself can be entered in the entry segment in the list.

Also, the unique information of each respective list is entered in the header and the like internal to each respective list and the unique information of data object is entered in the entry segment. Additionally, the unique information can be entered in any place selected form the object and the entry segment.

The device information layer 41 is a hierarchy to show device's information, and in a device information list in the device information layer 41 are carried such own information as a kind of protocol and demand supported by the device, device type derived by coding the type of the device, version information of the device and the like.

The device type is allowed to be expressed by a code or a character string as shown in sub-unit type of AV/C Digital Interface Command Set (AV/C - CTS) discussed in 1394TA (1394 Trade Association), for example. In addition, the device layer 41 is allowed to have the function information 8's own information and can also enter the support level and size of the function information 8, the maximum transfer rate of the equipment that can be transferred by a single time asynchronous transfer, and the like as the own information.

Here, these pieces of information can be entered in a device information list or in a root list prepared as a host list of the device information list. At this time, before the controller reads all the function information 8, the controller is allowed to determine whether or not the level is supportable, what size of memory space is needed, how big the transfer quantity for one time transfer should be and the like, for example, by just looking at the hierarchy, thereby enabling the elimination of a useless transfer.

The device GUI layer 44 is a hierarchy to show user interface information of a device, having located here such display components as a device name expressing the name of the device by a character string, a model name expressing a type number assigned to a product by the maker by a character string, and the like, each formulating a text object, respectively.

Also, here provided is a display component such as a still picture object and the like to show devices such as icons and the like, serving as a still picture object.

These text object, still picture object and the like have an entry in the device information list, respectively.

In addition to above, the device GUI layer 44 has here an audio object and such a data as music and the like indicating the device is allowed to be located.

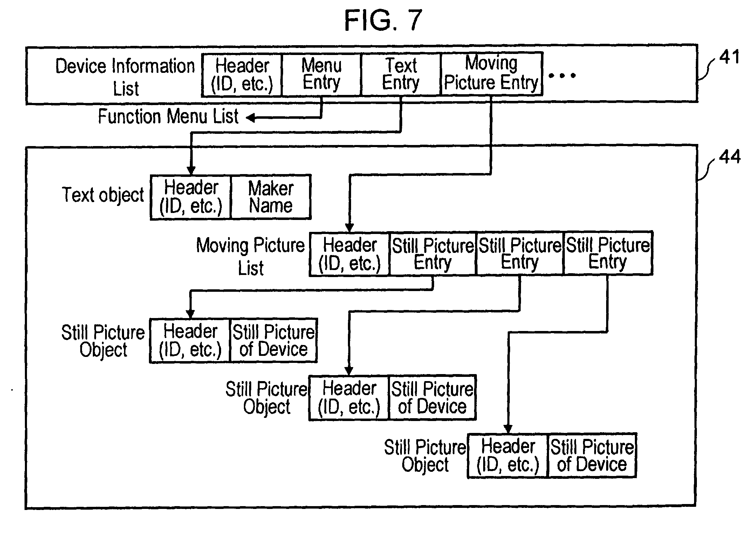

As shown in Fig. 7, by using a moving image list, a pseudo moving image formed of a plurality of still pictures is allowed to be used by replacing a still picture object, thereby enabling the user to have a more friendly operation picture.

Additionally, the foregoing pseudo moving image can be used by replacing a still picture in the function GUI layer 43 and the like of Fig. 4.

Each respective object has an entry in a device information list in the foregoing but, relative to objects with the same purpose, such a configuration as using a GUI list and having an entry in this GUI list is allowed to be adopted.

Furthermore, a configuration, in which for each respective classification of the GUI (such as display, selection, in operation, in use, error and the like) a corresponding GUI list is provided, can be employed, thereby allowing the user to use a display that is easy to understand.

Next, the function information layer 42 is a hierarchy, whereby the function of a device is indicated, and formed of a function menu list and a function list. The function menu list is linked to an entry in the device information list and provided with an entry of each respective function indicated by each function list and an entry of each of the display components for the operation display picture and the list's own indication.

Here, the display components for the operation display picture and the list's own indication are located according to the GUI list, and a flag is attached to each respective entry of the GUI lists, the flag indicating the purpose of the display component (such as for display, for identification and the like). A data of each respective display component is located under the GUI list.

In addition to above, an entry of each respective display component can be directly located in the function menu list, thereby having a flag indicating the purpose entered in the entry of each respective display component. Further, the function menu list has information needed in constructing an equipment's operation display picture and also has such information as a picture size and the like, which is assumed by the function information 8, as its own information in a header and the like.

The function menu list has a function list for each respective function that is supported by this device and also has its unique information on a function type derived by coding the type of function and a flag and the like to indicate whether there are the possibilities of losing this function dynamically or not.

For example, a VCR has such functions as replay, record, stop, fast forward, rewind, still, triple speed replay and the like and a function list is prepared for each respective function of the foregoing.

In each respective function list is entered such a function type as replay, record, tape operation and the like, for example. Even against the device with a new function that can not be thought of at present, the function information layer 42 has a function list for the foregoing new function.

The function GUI layer 43 is a hierarchy that indicates user interface information of each respective function and the function list for each respective function prepared in the function information layer 42 by sorting is further sorted in the function GUI layer 43 according the conditions of the user's operation and the device, the function GUI layer 43 prepares a GUI list for each sorting and the GUI list has its unique information such as a GUI type obtained by coding the type of GUI and the like. There are such entries as a text object, a still picture object and the like in the GUI list and in the entries are contained the flags indicating each respective text, kinds (formats) of still pictures and the size of the still picture, and the like and further each data object's own information such as placement information on the display screen expressed by relative positions against the display screen, the relative positions being assumed by the device.

As the GUI types there are, for example, the "screen display" used when a function is displayed on the display screen of a controller, the "selection" used when the foregoing function is selected on the display screen of the controller, the "in operation" used when a device is performing the foregoing function, the "error" used when the device rejects the command from the controller relative to the foregoing function, and the like.

Also, against a device with a new function that can not be thought of at present, the data on this new function is transmitted to the controller by having a display component such as a still picture and the like indicating this new function located in the function GUI layer 43, thereby allowing the user to receive the information on the new function.

The device GUI layer 44 is made to have only one still picture object but is allowed to have a plurality of display components sorted according to the user's operation and device's condition.

At this time, the display components are separated from one another according to GUI types prepared by coding the sort (such as display, selection, in operation, in use, error and the like) of GUI. The function GUI layer 43 is made to use a GUI list and to have a text object and a still picture object but also allowed to use only one selected from the text object and still picture object without using the GUI list.

Further, when one function has only one display component, the function list can be eliminated and the text object and still picture object can be located directly in the function menu list.

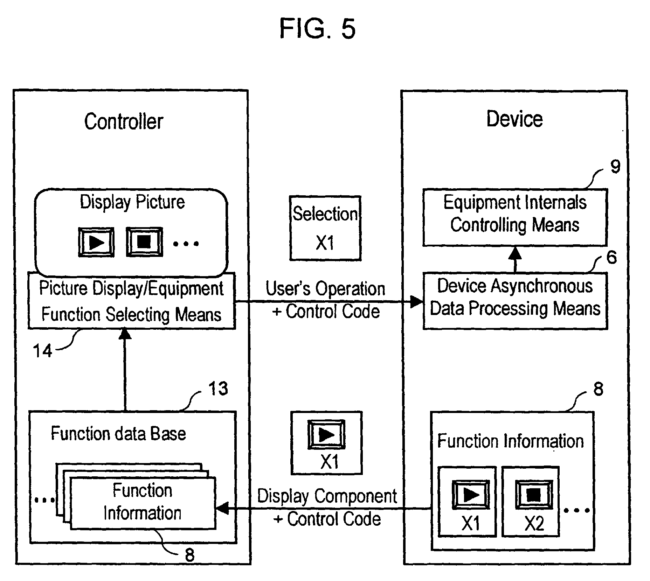

Fig. 5 is a diagram to describe a network control system in the first exemplary embodiment and a description is given to the control operation of a controller and a device with reference to Fig. 5.

In Fig. 5, when a device is hooked up to the transmission line 1, a controller on the transmission line 1 recognizes the new device by means of a bus reset and the like in case of the 1394 bus, for example, reads the function information 8 from the new device via the transmission line 1 according to a directive of the function information managing means 12 and reads the function information 8 for registration with the function data base 13 of the controller.

Here, each respective piece of the function information 8 is sorted by each device's unique ID and the like, thereby establishing a list configuration having an entry for each respective device.

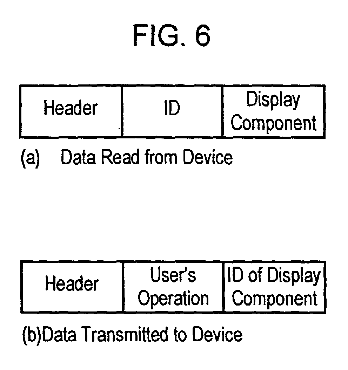

At this time, all the function information 8 can be read together or only part of the function information 8 can be read. Further, the function information 8 can be read by each object or by each list. For example, a packet transmitted from a device to a controller is transmitted with a display component and the ID thereof combined as shown in Fig. 6(a).

In case where a controller does not have enough memory areas, for example, the device information layer 41 and device GUI layer 44 can be first read when a new device is newly connected. Also, each respective display component is sorted in the controller with the use of an ID formed by combining the device's own unique ID and the display component's ID assigned by the device. However, the controller can be configured to have a conversion table between (the unique ID of the device + the ID assigned by the device) and a new ID, which is formed by a renewal of the ID of each respective display component carried out by the controller. In addition, a display component having an ID is included in the function information 8.

The display/equipment function selecting means 14 sees for reference the function information 8 (or part of the function information 8) in the function data base 13 via the function information managing means 12.

When the display/equipment function selecting means 14 displays a listing of the devices connected with the controller, the display/equipment function selecting means 14 reads the display components of the device GUI layer 44 (such as a text object, a still picture object and the like) from the function information 8 of all the devices registered with the function data base 13 by using the function information managing means 12 and displays the display components on the screen. It is not necessary to display all the display components of the device GUI layer 44 and only the display components selected appropriately is allowed to be displayed on the screen.

According to service conditions of each respective equipment, a still picture object such as "in use" and the like is read from the device GUI layer 44 and can be displayed on the screen, thereby allowing the user to use a more easily understandable device listing.

When there is an audio object in the device GUI layer 44, this is not used at the time of displaying a listing of devices and, when a new device is hooked up under the conditions where a device listing has already been displayed, for instance, the still picture object of the new device is displayed on the screen and at the same time the audio object is reproduced.

Next, when the user has selected the still picture object of a device, for example, by using the remote controllers pointing function (such as keys with a cross-like arrangement of a remote controller indicating up-and-down or side-to-side movements) and the like, the display/equipment function selecting means 14 reads display components of the function GUI layer 43 from the function information 8 of the device and a function list of each respective function entered in the function menu list of the function information layer 42 by using the function information managing means 12, thereby displaying on the screen a display component corresponding to each respective function.

Accordingly, display components indicating all the functions of this device are allowed to be displayed on the screen. Each respective display component is identified according to the unique ID of the device and the ID of each respective display component here, too.

Although each respective function has a display component, due to the relation with other display items and such restrictions as picture's resolution and the like, such flexible measures as displaying only the text objects without displaying the still picture objects against several functions and changing the positional relations between still picture objects for each respective function and the like can be taken even when enough locations can not be retained for displaying the display components for all the functions.

In other words, since each respective device has a display component for each respective function, the right to make a final determination of image display is allowed to rest with the controller, thereby enabling the realization of flexible displaying.

Next, when the user selects, for example, a display component indicating device's reproducing function, the display/equipment function selecting means 14 transmits an ID of the display component assigned by the device as shown in Fig. 6 (b) with the ID serving as a control code to the device together with user's operation information (such as "selection", for example).

More specifically, the cursor is moved onto the display component by manipulating the remote controller's keys with a cross-like arrangement and, even when a selection button is released after the selection button is pushed down, the ID (control code) of the display component and the user's operation information ("selection") are transmitted to the device. When a text object for explanation, which describes the function of the GUI list of the function GUI layer 43 is located under the GUI list and in case where one of the buttons located on the remote controller except for the selection button, the explanation button, for example, is pushed by the user and then the explanation button is released, the ID of the display component and the user's operation information ("explanation") are sent to the device.

Sending more detailed operation information of the user is also possible. By performing such an operation as "push", "release", "push twice" or the like through a remote controller or a pointing device, sending these pieces of operation information to the device is also possible.

Here, the user's operation information is coded and can be sent together with a display component's ID or each respective piece thereof can be sent as a command (a control code such as a display component's ID and the like acting as an operand).

Since a display component's ID is used as a control code in the present exemplary embodiment, it is not necessary for a specific control code such as a command and the like corresponding to a function to be set forth by a standardization organization and the like and all the functions, which a device has, can be controlled with the use of a simple configuration.

When the user has selected a display component indicating the reproducing function of a device, for example, the display/equipment function selecting means 14 displays reproduced images from the device on the screen upon receiving a correct response from the device and at the same time takes out a display component of "in operation" from the reproducing function located in the function GUI layer 43 and have this display component overwritten on the display component indicating the reproducing function.

Although the display component is described as being changed in the foregoing when a correct response is sent back from the device, the display component to be displayed can be renewed when the device is brought into a reproducing status with a set up established in advance so as to keep watching the conditions of the device. When the device's conditions have changed as observed in the device asynchronous data processing means 6 and equipment internals controlling means 9 of the device, a set up can be established so as to inform the controller, which has transmitted an originating control code, that the change in conditions has taken place. At this time, it is no longer required of the controller to watch the device's conditions, thereby allowing the traffic of the transmission line 1 to be reduced with a resulting effective use of the band of the transmission line 1, and also allowing the controller's load to be reduced.

When a control code transmitted from the controller is not accepted by the device for one reason or another, the display/equipment function selecting means 14 detects that the device has not accepted the control code though the response to the transmitted control code, the observation of device's conditions and the like, takes out a display component of "error" from the reproducing function located in the function GUI layer 43 and has this display component overwritten on the display component indicating the reproducing function and displayed on the screen. In the foregoing, the display component of "error" is described to have been overwritten on the position where the display component indicating a reproducing function is located but can be displayed by enlargement on the screen at such a conspicuous position as the center of the screen and the like, for example.

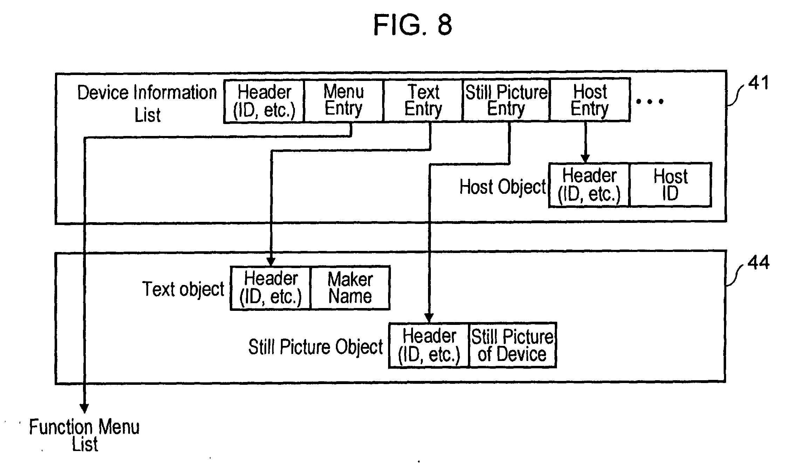

In addition, as shown in Fig. 8, a host memory area, where a controller's identification data (unique ID) controlling this device is written, can be had as a host object with the device information list linked thereto in the device information layer 41 in the device.

At this time, a controller intended for controlling a certain device first reads the host object and checks whether or not a valid ID is written in the object. If not, the controller writes its own device's ID in the host object.

Additionally, also allowed is such an arrangement as the controller sends its own ID to the device and the device writes in the host object.

In case where an ID of a different controller is written in the host object, the different controller is in use and therefore a display component indicating that the device is being used is displayed on the display screen in the controller.

A controller finished with the use of a device makes the host object invalid by clearing (entering zero, for example) the contents of the device's host object, and the like. Accordingly, the controller can easily know whether this device is in use or not by checking the object, thereby readily enabling the realization of an exclusive control of the device.

At this time, a flag indicating whether or not a valid ID is carried in the host object can be had in a host entry. Further, when an object in the device has changed, a controller that should be informed of this change can be easily found just by checking the host object. When the device does not accept a control from the controller because of recording being programmed and the like, the device can prevent interference caused by other controllers by recording the device's own ID in the object. The controller may be allowed to write priorities in the right to use in the object's entry and the like together with the ID and it can allowed that a controller having a priority higher than the priority in the right to use as mentioned above can have the right to rewrite the host object.

In addition, it can also be allowed that the controller transmits priorities in the right to use to the device together with an ID and the device writes these in an entry and an object of the host object.

A set up is established for the device so as to check in a predetermined period after having received a control code whether or not the controller of the ID indicated by the host object exists on the transmission line 1, thereby allowing the situation, where a controller no longer existing on the transmission line stays on with the right to use kept retained, to be evaded.

Instead of being checked, the controller can be cleared in a predetermined period after having received the control code. In this case, the ID of a controller, the right to use of which is to be continued, has to be written again in the host object during the foregoing predetermined period.

Alternatively, in case where the conditions of the transmission line 1 have shown a change to have a device or a controller on the transmission line 1 added/disappeared, the controller detects this change in conditions by bus reset and the like, for example, and in a predetermined period after the bus reset can write its own ID in the host object of the device, the right to use of which is desired to be continued.

At this time, the device prohibits the controllers not having the right to use before the bus reset from writing in the host object during the foregoing predetermined period after the bus reset.

In addition, in case where no writing in the host object takes place in the predetermined period after the bus reset, the device makes the contents of the host object invalid and divests the right to use.

In addition to above, a device that is controllable by two controllers is allowed to have two host objects.

Although every display component for each respective device and function is transferred from a device, when display components different from one another are received from a plurality of DVC's, for example, are received, a display component of each respective function existing in the function information 8 of any DVC can be used for the common function of these DVC's and, relative to a function existing in a specific DVC only, the screen data of the DVC is allowed to be used.

With regard to general functions, a controller has a display component in advance and enters the information indicating these functions (such as a command determined by an organization for standardization and the like, for example) in the function information 8 in a device so as to establish a set up not requiring the display component, thereby allowing the display component in the controller to be utilized against these functions.

Thus, by providing commonality among a few devices in display components of function or device, consistency can be maintained among the images displayed by a controller, displays produced at the time of operations and the like.

As needs dictate, one or a few of the device information layer 41, function information layer 42, function GUI layer 43 and device GUI layer 44 can be omitted in consideration of equipment ability, function and the like.

The function information 8 is also allowed to have a sub-device information layer to show information of a sub-device and a sub-device GUI layer to show GUI information of a sub-device under the device information layer 41. In the foregoing, the configuration of the sub-device information layer is the same as that of the device information layer 41 and the configuration of the sub-device GUI layer is the same as that of the device GUI layer 44.

According to the present exemplary embodiment, a device has a display component to configure the device's operation picture and a control code corresponding to the display component and a controller reads the display component and control code from the device and displays the display component on the display screen. When the user manipulates the display component displaying on the display screen, the controller transmits the control code corresponding to the display component and the user's operation information to the device, thereby allowing the device to realize an operational environment that the user can understand easily in a simple configuration through the execution of the function indicated by the display component according to the control code and user's operation information and also to cope readily with a device having a new function that may not be thought of at present.

In addition, it can be readily realized that a button is provided with a plurality of functions according to the user's operation.

Furthermore, the function executed by the device is allowed to vary in accordance with the user's operation of one of the display components, thereby making it possible to realize the operation of many functions with a small number of displays.

Additionally, by having a function table of all the devices that are usable by a controller, information of each respective device is allowed to be displayed quickly.

Also, with a device information layer to indicate device's information to function information and a function information layer to indicate the function of the foregoing device provided in the function information, the operational environment for each respective device and the operational environment for each respective function of the device are allowed to be optimized, thereby enabling the realization of an operational environment that is friendly to the user.

The provision of a device GUI layer and a function GUI layer, in which device's user interface information indicated by a device information layer and a function information layer is entered, allows a flexible operational environment to be created for each respective device or for each respective function.

Further, by having the function information provided with a display component indicating a device or a function, it becomes possible for a screen display to be optimized for each respective device and function, thereby allowing the user to have an operation picture that is easy to understand.

In addition, with a device GUI layer or a function GUI layer provided with its own display component for each respective sort, it becomes possible for a screen display to be optimized for each respective sort of each hierarchy, thereby allowing the user to enhance intuitive understanding and have an operation picture that facilitates operation.

Moreover, by making a control code as an object ID of a display component, the identification of the display component and the function indicated by the display component can be controlled with one code, thereby facilitating the control of display components in a device and also ending up with a small number of locations for memory and the like to realize easy handling.

Furthermore, the information in the function information is differentiated by using the ID of each respective object and, therefore, each respective object can be located in an arbitrary space in a device irrespective of a physical element such as ROM, RAM and the like, and further only part of the function information such as a device information list and the like can also be configured in a directory configuration.

When a display component is altered, a device transmits the information on the altered display component to a controller, thereby not requiring the controller to always watch an object that has the possibilities of undergoing alterations with a resulting reduction in processing by the controller and coping readily with the object that undergoes incessant alterations.

When a device has a host object that carries an ID of a host at the present time and, when a controller controls the device, the controller writes its own ID in the host object and gains the right to use, thereby allowing the location, where a notice to be delivered at the time when a display component in the device undergoes an alteration, to be found easily and also enabling the realization of an exclusive control with a simple configuration.

When a controller controls a device, the controller writes its own ID in a host object acting as a host memory area and also writes a flag indicating priorities of the right to use, thereby enabling the grant of an approval to the controller by assigning priorities thereto as a result of gaining the right to use.

A device confirms whether or not a controller with an ID indicated by a host object in a predetermined period after the most recent time, when a command was accepted, exists on the network, thereby preventing the controller from suspending operation while the right to use being retained by the controller.

A device makes the contents of a host object invalid in a predetermined period after the most recent time, when a command was accepted, and the device can prevent a controller, which desires to keep holding the right to use, from suspending operation while the right to use being retained by the controller by rewriting the controller's own ID in a host object of the device in a predetermined period after the most recent time, when a command was sent to the device.

When the right to use of a device is continued, a controller rewrites a controller's own identification data in a host memory area of the device in a predetermined period after the change in conditions of the transmission line and the device can make the controller, which is using the device, continue, holding the right to use irrespective of the conditions of the transmission line and also the device prevents the controller from suspending operation while retaining the right to use by making the contents of the host memory area invalid.

By having an audio object included in the function information, the optimum audio information is made available to the user in accordance with the situations.

Additionally, a flag indicating the method for reproducing the audio object can be provided here, thereby allowing finer expressions to be realized.

Although a still picture data or a text data is to be used as a display component in the device GUI layer or the function GUI layer, an image screen and an audio output of a controller are allowed to be realized with the use of an execution code executable in the controller and a byte code assuming a virtual machine. In this case, there exist some restrictions in the configuration of the controller (such as kinds of CPU, a support to the virtual machine and the like) but the same effects can be gained and also a variety of expressions are made possible.

### (Second Exemplary Embodiment)

Next, a description is given to a second exemplary embodiment of the present invention with reference to drawings.

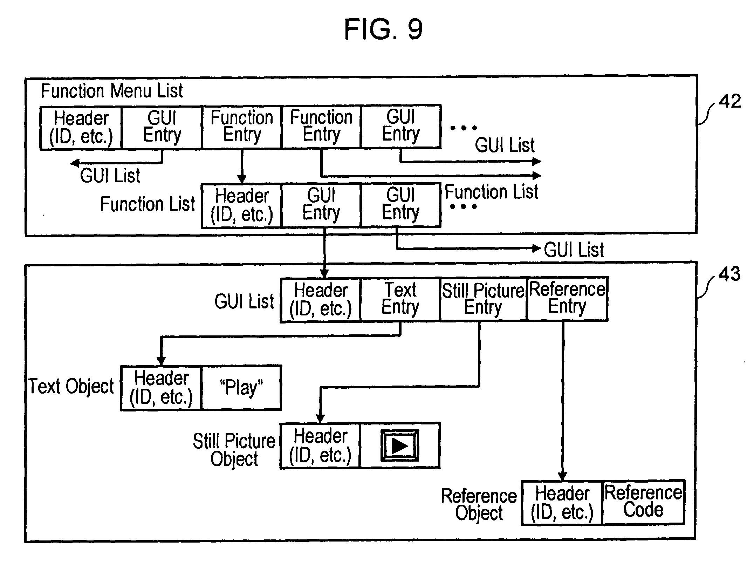

Fig. 9 is a diagram to describe function information in a second exemplary embodiment of the present invention. A description of the same composing elements as used in the first exemplary embodiment is omitted here.

In Fig. 9, a function information layer 42 in the function information 8 has a function list for each respective function supported by a device and unique information such as a function type formed by coding the type of a function, a flag indicating a possibility of whether the function vanishes or not dynamically and the like is included in a header and the like.

For example, a VCR has such functions as replay, record, stop, fast forward, rewind, still, triple speed replay and the like and a function list is prepared for each respective function of the foregoing. In each respective function list is entered such a function type as replay, record, tape operation and the like, for example. Even against the device with a new function that can not be thought of at present, the function information layer 42 has a function list for the foregoing new function.

A function GUI layer 43 is a hierarchy that indicates user interface information of each respective function and the function list for each respective function prepared in the function information layer 42 by sorting is further sorted in the function GUI layer 43 according to the users operation and the conditions of the device, thereby preparing a GUI list for each sorting, in which unique information such as a GUI type obtained by coding the type of GUI and the like is provided in a header and the like.

Such entries as a text object, a still picture object and the like and also an entry to a reference object are included in the GUI list.

There is information to indicate kinds of the reference object in a reference entry. This information includes, for example, a "device control code" indicating a device's own control code, which the reference object should transmit to a device, a "command" indicating a command which the reference object indicates the function to the device, a "command implied" which is not a command itself but implies the function to the controller, a "cursor shift" or a "separate menu" giving the controller a directive to display on the operation display picture, a "writing" whereby a directive is given to the device to write the object, and further, in case where the object is an object with variables (such display components as a slider and the like or part thereof, for example), an "increment", a "decrement", an "addition of step value", a "subtraction of step value" and the like indicating addition and subtraction of variables.

When the kind of a reference object is a "command", the command is written in the reference object with a format whereby a device can realize the function just by transmitting the content of the object as is to the device. For example, when an AV protocol of the 1394 bus is employed, the content of an FCP packet as is is carried.

Accordingly, the controller is allowed to know the function through the reference object and the function is allowed to be displayed on the display screen by using the display component in the controller without using the display component in the GUI list.

Further, when the kind of a reference object is a "command hint", the closest command to indicate the function is carried from the standardized commands (such as AVC-CTS, for example).

As a result, the controller is allowed to know the outlines of the function through the reference object and the function is allowed to be displayed on the display screen of the controller by using the display component in the controller instead of using the display component in the GUI list.

When the information of the function information 8 carried in the device can not be displayed as is due to such restrictions as the size of the controller's display screen and the like, the controller is also allowed to use the "command hint" as the information for determining the display position of the display component in the GUI list.

When the kind of a reference object is a "cursor shift" or a "separate menu display", an ID of the object, to which the shift takes place, and an ID of the object to be displayed (a function menu list) are carried in the reference object.

Further, when the kind of a reference object is "writing to", an ID of the object to be written to the device is carried in the reference object. In this case, the object to be written to may be or may not be in the function information 8 .

What is to be written to is carried in the header section of a function list, GUI list, reference object and the like. The reference object of this kind is used against a display component such as an input box taking characters, numerals and the like as an input, a display component such as a selection box whereby one data out of several data is selected, an object having variables, and the like, for example.

When the kind of a reference object is an "increment", a "decrement", an "addition of step value" or a "subtraction of step value", these commands to the device are carried in the reference object.

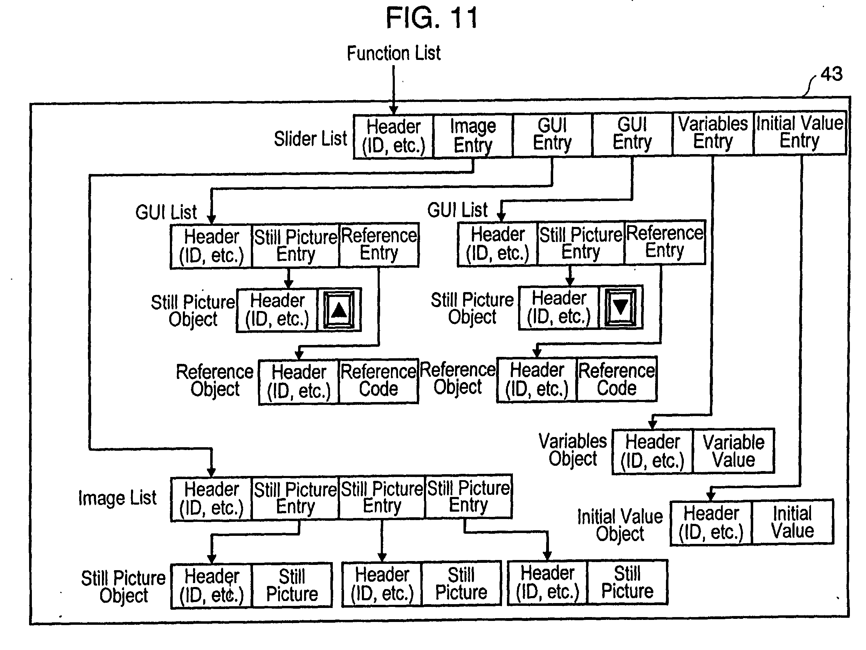

Fig. 11 is an exemplified configuration, in which a slider is realized with the function information 8. According to the configuration indicated by a slider list, a display component with variables such as a slider, a dial and the like can be easily realized.

A GUI entry in the slider list of Fig. 11 has a display component to adjust each respective variable by addition or subtraction and an entry to the reference object, and the adjustment of the variables for an increase or a decrease is performed by the user's selection of the display component (by pushing and releasing buttons of a remote controller).

In other words, when the user selects a still picture object linked to the GUI list, a reference object is selected from the reference lists linked to the GUI list according to the sequence of entries recorded in the list and executed. When not only the adjustment of the variables for an increase or a decrease but an operation of writing the variables in the device is needed, the variable are allowed to be renewed by using reference objects of "increment" and "writing', for example.

Here, the controller recognizes the function of the reference object to have the variables altered because of the kind of the reference object being an "increment" and, when the "writing in" the device fails, the controller reads an object indicating a variable in the device and displays a display component indicating a correct value.

In this occasion, although these functions can also be realized according to the method as described in the first exemplary embodiment, the configuration in the present exemplary embodiment allows the controller to know the alterations in variables caused by the operation of the user and to configure a more responsive operation picture without waiting for the response of the device.

In this connection, the ID of an object indicating variables is also to be carried in reference objects and the same function can be realized by using the reference object of "writing in" together with these reference objects.

When the kind of a reference object is a "device control code", the content of the reference object can be an ID of a display component in the same way as in the first exemplary embodiment or can be a control code assigned by the device separately. For example, by making reference objects indicating the same control code correspond to a plurality of display components, a plurality of defferent display components are allowed to point to the same operating status of the device.

Furthermore, when the kind of a reference object is a "controller control code", the content of the reference object is a control code to specify the operating status of the controller. For example, the controller is allowed to give a directive such as data format conversion processing and the like, an on/off operation of displaying on the operation picture, and the like, and the device is allowed to direct the operating status of the controller.

When the kind of a reference object is a "device control code"; a "command" and the like for controlling the device, the data in these reference objects are sent to the device to carry out the controlling of the device.

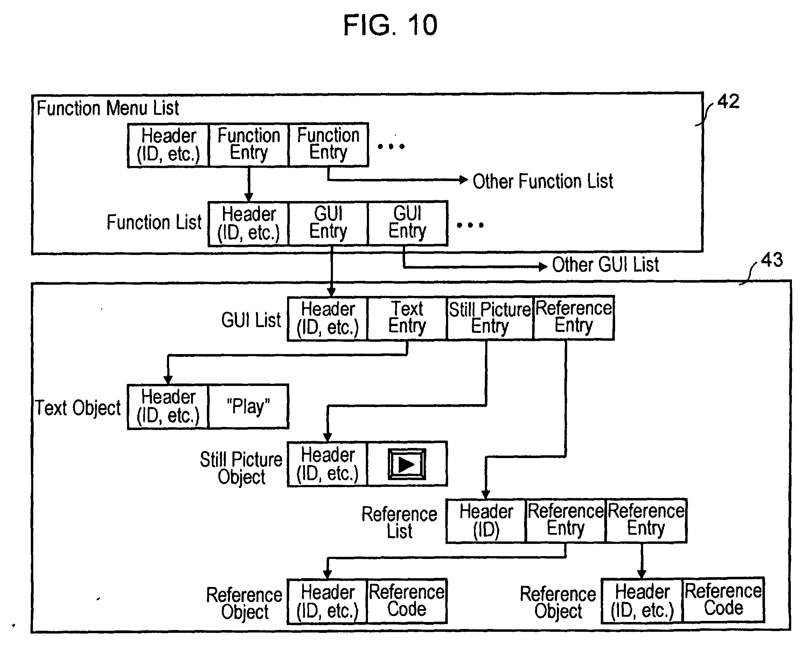

Fig. 10 is an example of function information in case where a plurality of reference objects are involved. There is an entry to a reference list together with entries such as a text object, a still picture object and the like in a GUI list.

In the reference list are included entries to a plurality of reference objects and an ID carried by each respective entry indicates a corresponding reference object. The entry sequence of the reference objects in the reference list indicates the order whereby each respective reference object is executed. The content of the reference object is the same as the one in Fig. 9.

Also, instead of using the reference list, the GUI list is allowed to have a plurality of reference object's entries, resulting in gaining the same effect.

Next, a description is given to the operating status when the function information 8 indicated in Fig. 9 is read by a controller.

When a controller reads a display component in a function GUI layer 43 from a function list for each respective function as carried in the function menu list of a function information layer 42 and displays a display component corresponding to each respective function on the display screen, a display/equipment function selecting means 14 recognizes an entry to the reference object in a GUI list of the function.

When the user selects a certain display component indicated by the GUI list by using a pointing function and the like of a remote controller, the display/equipment function selecting means 14 recognizes the kind of the reference object indicated by the GUI list and, according to the directive thereof, executes the content indicated by the reference object.

For example, when the kind of a reference object is a "display of a separate menu", an ID of the function menu list indicated by the reference object is obtained and the content of the function menu list indicated by the ID is displayed on the display screen.

When the GUI list has a reference list, directives from the reference object are executed in a sequence indicated in the reference list. For example, when there are a "device control code" and a "cursor shift" in this sequence in the reference list, the controller transmits first the "device control code" to the device and, upon receiving a correct response from the device, the controller shifts the cursor to the object indicated by the reference object of the "cursor shift".

When the device does not return a correct response, a display component of "error" is displayed for this function and the cursor is not allowed to shift.
However, the controller has the right to make a final decision on these display operations.

Accordingly, by making a control code independent from a display component correspond to each respective display component, the same function is indicated readily by a plurality of display components.

Also, a device has a display component and a plurality of control codes against the display component and, by the device's execution of the function indicated by the display component according to the control code, a plurality of functions such as a screen display, a device control and the like are allowed to be executed against a controller with a single display component, thereby enabling the user to execute a complicated operation in one operation and making available a user-friendly operation picture.

In addition, the device's function is specified with the user's operation and the control code combined and, therefore, a small number of displays allows a complicated operation to be presented to the user in such a way as easy to understand and also the device makes available an operation picture that can display many functions even on a controller's small sized display screen.

Further, by making a display component correspond to navigation information of the operation picture, a device is allowed to specify the switching between menus, cursor shifts and the like at the device's side, thereby making it easier for the user to understand the design concept of an operation picture as intended by a designer in charge.

With a code for directing controller's performance included in a control code, a device is allowed to give directives to the controller about the operation thereof, thereby enabling the realization of navigation on the controller as intended by the designer of the operation picture and allowing a user-friendly operation picture to be available. Furthermore, when the user is faced with a situation where the device shows difficulties in handling the processing, the situation can be dealt with in the controller, thus enabling the expansion of the device's function and also the placement of a common processing module in the controller only with resulting effective utilization of resources.

### (Third Exemplary Embodiment)

Next, a description is given to a third exemplary embodiment of the present invention with reference to drawings.

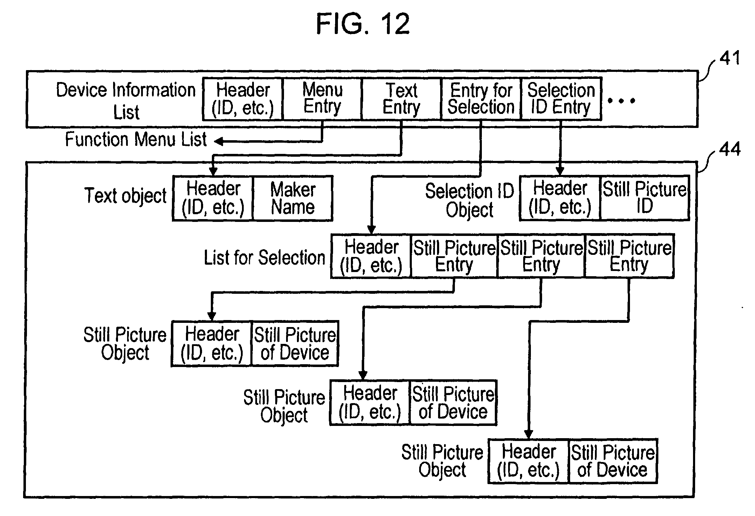

Fig. 12 is a diagram to describe function information in a third exemplary embodiment of the present invention. The same composing elements as used in the first exemplary embodiment are assigned with the same reference numerals and a description thereof is omitted here.

In Fig. 12, a device information layer 14 in function information 8 is a hierarchy to indicate device's information and the device's own information such as kinds of protocol and command supported by the device, a device type formed by coding the type of the device, version information of the device and the like is carried in headers and the like of a device information list in the device information layer 41. An entry to a device GUI layer 44 is being carried in the device information list.

A device GUI layer 44 is a hierarchy to indicate device's user interface information and herein included are display components such as a device name with the name of the device expressed in a character string, a model name with the type number of a maker's product expressed in a string of alphanumeric characters, and the like, each of which forms a text object.

Also, there is a list for selection put in place here. In the list for selection are included a plurality of still picture's entries indicating the entries to a plurality of still picture objects expressing icons of the device. Any one of the plurality of still pictures indicates this device and what differs from one another is in composition, realistic-looking in expression and the like.

In addition, the device GUI layer 44 has an identification information memory area, i.e., a selection ID object, to store a flag for identifying a display component selected by the user and an ID of a still picture object selected by the user from the still picture objects in the list for selection is stored as a flag for identification.

Next, a description is given to the performance of a controller. When a display/equipment function selecting means 14 displays a device shown in Fig. 12, the display/equipment function selecting means 14 reads display components of the device GUI layer 44 (such as a text object, a still picture object and the like) by using a function information managing means 12 from the function information 8 of the device taken into a function data base 13 and displays these on a display screen. Here, the controller acting as an icon to indicate the device recognizes entries to a list for selection and a selection ID object in a device information list and, when an ID of the still picture object selected by the selection ID object is carried in the list for selection, the controller displays the still picture object of the ID in the list for selection on the controller's display screen.

Also, when a selected ID is not carried in the selection ID object, the controller displays the first still picture object of the list for selection on the display screen.

When the user desires to alter the icon of the device, the controller reads and displays all the still pictures carried in the list for selection of the device. When a still picture indicating the device is selected according to a directive of the user, the ID of the still picture is entered in the selection ID object.

Accordingly, by having a list for selection and a selection ID object, the user is allowed to select an image (an icon), a nickname and the like of his liking for the device and, even when a plurality of devices of the same kind are hooked up with a transmission line 1, the user is allowed to identify the device easily.

Furthermore, it is no longer necessary for the user to search for favorite images inputted from a camera and the like and process the images to an appropriate size and, therefore, the user is allowed to attach the favorite images and nicknames to the device easily.

Although a description has been made with the still picture as a device in the present exemplary embodiment, the same effect can be gained for text data such as a device name and the like and pseudo moving images because of the list for selection and the selection ID object put in place.

Although the selection ID object is made to have existed in the device GUI layer 44, it can be entered in the device information layer 41.

Moreover, a flag is allowed to be put in place to see whether the selection ID object exists in the entry of this object or not) thereby allowing the controller to determine quickly whether a user defining object exists or not.

### (Fourth Exemplary Embodiment)

Next, a description is given to a fourth exemplary embodiment of the present invention with reference to drawings.

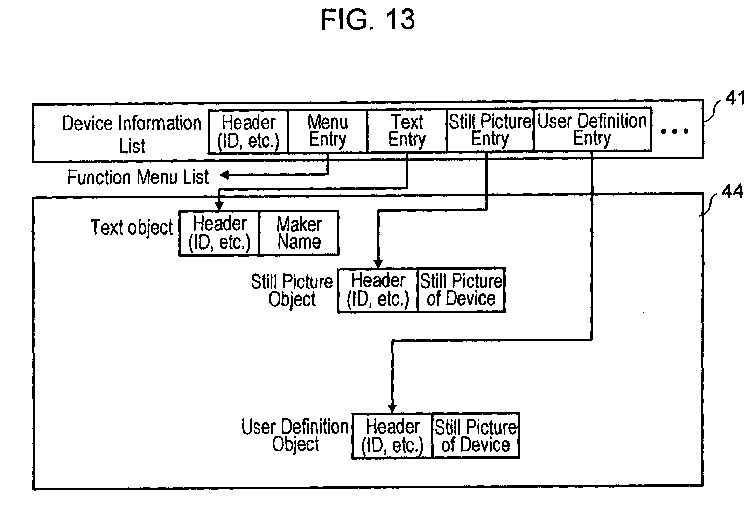

Fig. 13 is a diagram to describe function information in a fourth exemplary embodiment of the present invention. The same composing elements as used in the first exemplary embodiment are assigned with the same reference numerals and a description thereof is omitted here.

In Fig. 13, a device information layer 41 in function information 8 is a hierarchy to indicate device's information and the device's unique information such as kinds of protocol and command supported by the device, a device type formed by coding the type of the device, version information of the device and the like is carried in headers and the like of a device information list in the device information layer 41. An entry to a device GUI layer 44 is being carried in the device information list.

The device GUI layer 44 is a hierarchy to indicate device's user interface information and herein included are display components such as a device name with the name of the device expressed in a character string, a model name with the type number of a maker's product expressed in a string of alphanumeric characters, and the like, each of which forms a text object.

Also, the device GUI layer 44 has as a still picture object a display component such as a still picture object and the like indicating such a device as an icon and the like.

These text object, still picture object and the like have entries in the device information list. Further, the device GUI layer 44 has an identification information memory area to store a display component acting as identifying information for the user to identify the device, i.e., a user defining object.

Next, a description is given to the performance of a controller. When a display/equipment function selecting means 14 displays a device shown in Fig. 13, the display/equipment function selecting means 14 reads display components (such as a text object, a still picture object and the like) of a device GUI layer 44 by using a function information managing means 12 from the function information 8 of the device taken into a function data base 13 and displays these on a display screen.

Here, the controller understands the existence of an entry to a user defining object in a device information list and recognizes an ID of the user defining object with an icon to indicate the device and also, when a still picture data is carried in an object indicated by the ID of the user defining object, the controller displays this data (the still picture data) of the display component in the user defining object on the controller's display screen.

When the still picture data is not carried in the user defining object, the controller displays a still picture object indicated by the still picture entry in the device information list on the display screen.

When the user desires to alter the icon of the device, the controller displays as candidates for selection a plurality of still pictures retained in the controller, for example. When one of the still pictures indicating the device is selected according to a directive of the user, this still picture data is entered in the device by using the ID of the user defining object.

Accordingly, by having a user defining object and allowing a controller to enter a still picture data in a user defining object in a device according to a user's operation, the user is allowed to define an icon of the device as needs require and, even when a plurality of devices of the same kind are hooked up with a transmission line 1, the user is allowed to identify a device easily.

Although a description has been made with the still picture as a device in the present exemplary embodiment, the same effect can be gained for text data such as a device name and the like by having a user defining object, thus allowing a nickname to be readily attached to the device, for example.

Also, a flag showing whether a user defining object exists or not can be entered in the entry of the object, thereby allowing the controller to determine quickly whether the user defining object exists or not.

As described in above, according to the present exemplary embodiment, the user is allowed to attach a favorite image, nickname or the like to a device by having such provisions as an identification information memory area to store identifying information for allowing the user to identify equipment, receiving data of display components for identifying the equipment selected by the user and storing the foregoing data in the identification information memory area, thereby allowing each respective device to be readily recognized even when a plurality of devices of the same kind are hooked up and also allowing an operation picture to be configured according to the user's liking.

### (Fifth Exemplary Embodiment)

Next, a description is given to a fifth exemplary embodiment of the present invention with reference to drawings.

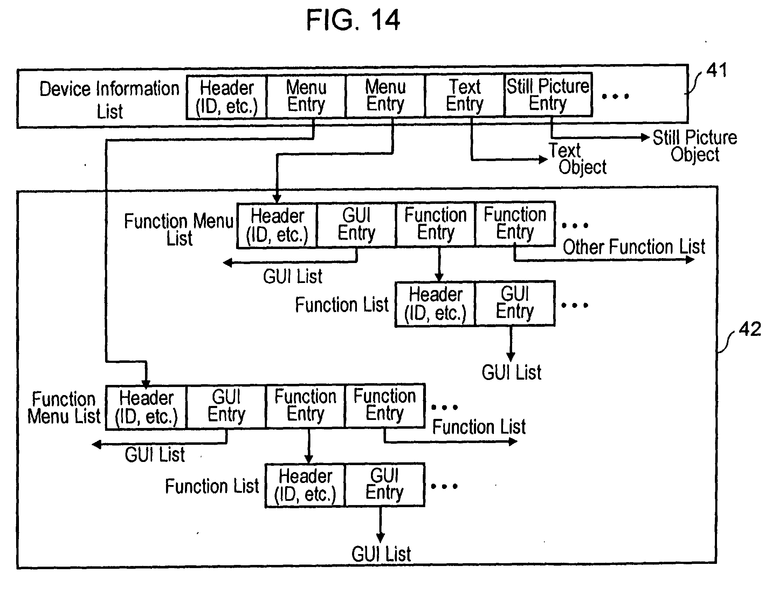

Fig. 14 is a diagram to describe function information in a fifth exemplary embodiment of the present invention. The same composing elements as used in the first exemplary embodiment are assigned with the same reference numerals and a description thereof is omitted here.

In Fig. 14, a device information layer 41 in function information 8 is a hierarchy to indicate device's information and the device's own information such as kinds of protocol and command supported by the device, a device type formed by coding the type of the device, version information of the device and the like is carried in headers and the like of a device information list in the device information layer 41.

The device information 41 has entries to a device GUI layer 44 and a function information layer 42 carried in the device information list. Also, the device information layer 41 has an entry to a plurality of operation picture data, i.e., a plurality of function menu lists as the entry to the function information layer 42.

The function information layer 42 has a plurality of function menu lists and each respective header section has attribute information and the like as its own information together with ID's indicating these lists entered therein. Each respective function menu list has a display component to demonstrate what the menu itself indicates as a GUI list and also has an entry to a function list.

Next, a description is given to the performance of a controller. When a display/equipment function selecting means 14 displays a device shown in Fig. 14, the display/equipment function selecting means 14 reads display components (such as a text object, a still picture object and the like) of a device GUI layer 44 by using a function information managing means 12 from the function information 8 of the device taken into a function data base 13 and displays these on a display screen.

Here, the controller displays a still picture object indicated by a still picture entry in a device information list with an icon to indicate the device.

When the user selects an icon of the device, for example, by using a pointing function (keys of a cross-like arrangement, for example) of a remote controller, the display/equipment function selecting means 14 retrieves a function menu list of the function information layer 42 by using the function information managing means 12, i.e., the entry of the device information list in the function information 8 of the device.

The controller detects that a plurality of function menu lists are entered in the device information list, thereby retrieving a GUI list to indicate the list itself of each respective function menu list and performing a display thereof on an operation picture configured newly by the controller, using the display components of text data, still picture data and the like as carried in the GUI list.

When the user selects any one of these display components on the operation picture by using a pointing function and the like of a remote controller, the controller displays an operational display corresponding to the display component on the display screen based on a suitable function menu list. Accordingly, even when there are a plurality of separate menus, the controller is allowed to display each respective operation picture easily.

Although the controller was to configure newly an operation picture in the present exemplary embodiment, the controller is allowed to display first an operation picture of the function menu list corresponding to the first entry out of a plurality of menu entries existing in the device information list and then to display operation screens corresponding to menu entries of the device information list by switching the screens with the use of a remote controller (menu button) and the like in sequence.

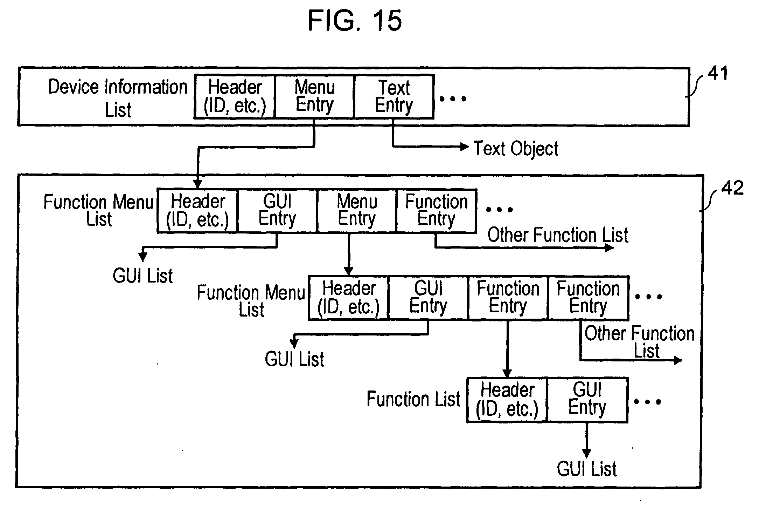

Fig. 15 is a diagram to describe an exemplary embodiment different from the present exemplary embodiment, in which the device information list has only one entry to the function list and the function information layer 42 has a function menu list of a layered structure.

When the user selects an icon of the device, the controller displays an operation picture indicated by the function menu list entered in the device information list.

At this time, the controller displays a display component to indicate the list itself in the sub-function menu list that corresponds to the entry against the menu entry located in the function menu list. When the user selects a display component indicating a function menu list in the subfunction menu list, the controller displays an operation picture of the function menu list corresponding to the display component.

Accordingly, a device has a plurality of operation picture data, each having a representation method different from what others have, and a controller displays an operation picture on the display screen by switching from one operation picture to others according to user's operation, thereby allowing the operation picture to be easily switched according to the application and circumstances on the part of the user.

Also, a controller is allowed to make the user recognize readily the operation picture, which a device has, by preparing a selection picture for selecting a plurality of operation pictures from a plurality of operation picture data of the device, which is the object to be controlled, and displaying the selection picture on the display screen and also the device is no longer required to have a selection picture for selecting a plurality of operation pictures, thereby allowing the device's memory areas to be reduced.

### Industrial Usability

A device has one or more display components to configure an operation picture and has control codes corresponding to the display components, and a controller reads a display component and a control code from the device and displays the display component on a display screen and transmits to the device a control code corresponding to the display component and user's operation information when the user manipulates the display component on the display screen. The device to receive the foregoing transmission executes the function indicated by the display component according to the control code and user's operation information, thereby enabling the realization of a user-friendly operating environment with a simple configuration and also the provision for coping easily with a new device having new functions that can not be thought of at present. Furthermore, the functions to be executed by the device are allowed to be altered according to the user's operation of a display component, thereby enabling the realization of operation against many functions with a minimal amount of displaying.

A device has at least one or more display components to configure an operation picture and a plurality of control codes corresponding to the display components, and a controller reads a display component and a control code from the device and displays the display component on a display screen, and transmits some of the control codes out of the plurality of control codes corresponding to the display components and to the device when the user manipulates the display component on the display screen. The device executes a function indicated by a display component according to the control code, thereby allowing one display component to respond to a plurality of control codes and enabling the combined execution of a plurality of function against the one display component and the execution of a complicated operation in one time operation performed by the user.

A device has at least one or more display components to configure an operation screen and a plurality of control codes corresponding to the display components, and a controller reads a display component and a control code from the device and displays the display component on a display screen, and transmits a few of the control codes out of the plurality of control codes corresponding to the display components and user's operation information to the foregoing device when the user operates the display component on the display screen. The device executes a function indicated by a display component according to the control code and user's operation information, thereby allowing one display component to respond to a plurality of control codes and enabling the combined execution of a plurality of functions against the one display component and the execution of a complicated operation in one time operation performed by the user. Since a device's function is specified by combining a user's operation and a control code, a complicated operation can be indicated to the user in an easy-to-understand manner with a minimal amount of displaying and also quite a few functions can be displayed even with a controller having a display screen which is small in size.

With a code giving a directive to a controller on its operation included in a control code, a device is allowed to give a directive to the controller on its operation, thereby enabling the realization of navigation on the controller as intended by the designer of the operation picture and the realization of display with a user-friendly operation picture. Moreover, even with the processing that is difficult for the device to handle, processing in the controller is made possible, thereby allowing the device's function to be expanded and also allowing a common module to be provided only to the controller with a resulting effective utilization of resources.

With a control code serving as an object ID of a display component, both the identification of the display component and the function indicated by the display component are allowed to be managed by using one code, thereby facilitating the management of display component in the device and also ending up with a small number of memory areas such as memory units and the like with resulting ease of handling.

By having a display component formed of a program that includes display elements, the representation at the time of displaying can be made full of varieties, thereby making a user-friendly display available.

When a display component undergoes an alteration, a device transmits the information of the altered display component to a controller, thereby allowing the controller to reduce the amount of processing without requiring the controller to watch always an object that is likely to undergo alterations and readily to cope with object that is undergoing alterations ceaselessly.

A device has an identification information memeory area to store identifying information whereby the user identifies the device and the device receives a data of a display component for identifying the equipment designated by the user and stores the data in the identification information memeory area, thereby allowing the device to have an image, a nickname and the like of user's liking attached to the device, allowing each respective device to be recognized easily even when a plurality of devices of the same kind are hooked up and also allowing an operation picture to be configured according to the user's tastes.

A device has an identification information memory area to store a plurality of display component kinds, whereby the user identifies the device, and a flag for identifying a display component of user's selection, the device receives the flag of the display component selected by the user and stores the display component in the identification information memory area according to the flag, thereby allowing the device to have an image, a nickname and the like of user's liking selected, allowing each respective device to be recognized easily even when a plurality of devices of the same kind are hooked up and also allowing an operation picture to be configured according to the user's tastes. Furthermore, it is no longer necessary for the user to search for favorite images or to pick images from a camera and the like and process the images to an appropriate size and, therefore, the user is allowed to attach the favorite image and nickname to the device easily.

Since a device has a plurality of operation picture data, each having a representation method different from what others have, a controller switches from one operation picture to others appropriately according to user's operation, thereby allowing the operation picture to be easily switched according to the application and circumstances of the user.

A controller prepares a selection picture for selecting a plurality of operation pictures from a plurality of operation picture data of a device to be controlled and displays the selection picture on the display screen, thereby allowing the user to recognize easily the operation picture, which the device has, and also it is no longer necessary for the device to have selection screen for selecting a plurality of operation screens, thereby allowing the device's memory areas to be reduced.

A device has a host memory area, in which a host's identification data at the present time is carried and a controller gains the right to use by writing the controller's own identification data in the hosts memory area of the device when it comes to controlling the device, thereby allowing the location, where a notice to be delivered at the time when a display component in the device undergoes an alteration, to be found easily and also enabling the realization of an exclusive control with a simple configuration.

A controller writes the controllers own identification data in a host memory area and also writes a flag indicating priorities of the right to use when the controller controls a device, thus allowing the controller to be assigned with priorities by gaining the right to use.

A device confirms whether a controller of an identification data indicated by a host memory area exists on the network or not in a predetermined period after the time when the device accepted a command most recently, thereby enabling the prevention of the controller from disappearing in operation while holding the right to use.

A device invalidates the contents of a host memory area in a predetermined period after the time when the device accepted a command most recently and a controller rewrites the controller's own identification data in the host memory area in a predetermined period after the time when the controller sent a command to the device most recently, thereby enabling the prevention of the controller from disappearing in operation while holding the right to use.

When the right to use of a device is to be continued, a controller rewrites the controller's own identification data in a host memory area of the device in a predetermined period after the time of status change in the transmission line and, when there is no rewriting in the host memory area in a predetermined period after the time of status change in the transmission line, the device invalidates the contents of the host memory area, thereby enabling the controller, while using the device, to continue holding the right to use regardless of the status of the transmission line and also enabling the prevention of the controller from disappearing in operation while holding the right to use.

### Reference Numerals

- 1: Transmission Line
- 2: Packet Transmitting/Receiving Means
- 3: Synchronous Data Transmitting/Receiving Means
- 4: Device Signal Processing Means
- 5: Asynchronous Data Transmitting/Receiving Means
- 6: Device Asynchronous Data Processing Means
- 7: Equipment Configuration Information
- 8: Function Information
- 9: Equipment Internals Controlling Means
- 10: Controller Signal Processing Means
- 11: Controller Asynchronous Data Processing Means
- 12: Function Information Managing Means
- 13: Function Data Base
- 14: Display/Equipment Function Selecting Means
- 15: ROM
- 16: RAM
- 17: Function Information Contents Managing Means
- 21: Television Receiver
- 22: Remote Controller for Television Receiver
- 23: Personal Computer (PC)
- 31: DVD
- 32: Video Cassette Recorder (DVC)
- 33: Video Cassette Recorder (DVHS)
- 34: Digital Movie (DVC Movie)
- 35: Set Top Box (STB)
- 41: Device Information Layer
- 42: Function Information Layer
- 43: Function GUI Layer
- 44: Device GUI Layer

## Claims

1. In an AVC system formed by connecting via a transmission line at least two or more of equipment that handles any one or more of data on video, audio or information, a network control system comprising:
a controller having a user interface; and
a device acting as an object to be controlled, with at least said controller and device included in said two or more of equipment, wherein
said device has at least one or more display components, each of which configures an operation picture for operating said device, and also has a control code corresponding to said display component;
said controller reads said display component and control code from said device and displays said read display component on a display screen;
said controller transmits the control code corresponding to said display component and also operation information of said user to said device when the user operates said display component on said display screen; and
said device executes a function indicated by said display component according to said transmitted control code and user's operation information.

2. In an AVC system formed by connecting via a transmission line at least two or more of equipment that handles anyone or more of data on video, audio or information, a network control system comprising:
a controller having a user interface; and
a device acting as an object to be controlled, with at least said controller and device included in said two or more of equipment, wherein
said device has at least one or more display components, each of which configures an operation picture for operating said device, and also has a plurality of control codes corresponding to said display component;
said controller reads said display component and control code from said device and displays said read display component on a display screen;
said controller transmits a few control codes out of said plurality of control codes corresponding to said display component and also operation information of said user to said device when the user operates said display component on said display screen; and said device executes a function indicated by said display component according to said transmitted control code and user's operation information.

3. In an AVC system formed by connecting via a transmission line at least two or more of equipment that handles any one or more of data on video, audio or information, a network control system comprising:
a controller having a user interface; and a device acting as an object to be controlled, with at least said controller and device included in said two or more of equipment, wherein
said device has at least one or more display components, each of which configures an operation picture for operating said device, and also has a plurality of control codes corresponding to said display component;
said controller reads said display component and control code from said device and displays said read display component on a display screen;
said controller transmits a few control codes out of said plurality of control codes corresponding to said display component to said device when the user operates said display component on said display screen; and
said device executes a function indicated by said display component according to said transmitted control code.

4. The network control system according to Claim 1, Claim 2 or Claim 3, wherein a control code includes a code giving a directive to a controller on the operation thereof

5. The network control system according to Claim 1, Claim 2 or Claim 3, wherein a display component includes at least one or more of still picture data and/or text data.

6. The network control system according to Claim 1, Claim 2 or Claim 3, wherein a control code is an identification data of a display component.

7. The network control system according to Claim 1, Claim 2 or Claim 3, wherein a display component is a program including a display element.

8. The network control system according to Claim 1, Claim 2 or Claim 3, wherein a control code is a program ID of a program.

9. The network control system according to Claim 1, Claim 2 or Claim 3, wherein in case a display component undergoes an alteration a device transmits information on said altered display component to a controller.

10. In an AVC system formed by connecting via a transmission line at least two or more of equipment that handles any one or more of data on video, audio or information with at least a controller and a device included in said two or more of equipment, a device comprising:
at least one or more display components to configure an operation picture for operating the device; and
a control code corresponding to said display component, wherein said device executes the function indicated by said display component according to said control code received via said transmission line and operation information of the user.

11. In an AVC system formed by connecting via a transmission line at least two or more of equipment that handles any one or more of data on video, audio or information with at least a controller and a device included in said two or more of equipment, a device comprising:
at least one or more display components to configure an operation picture for operating the device; and
a plurality of control codes corresponding to said display component, wherein said device receives a few control codes out of said plurality of control codes and operation information of the user via said transmission line and executes the function indicated by said display component.

12. In an AVC system formed by connecting via a transmission line at least two or more of equipment that handles any one or more of data on video, audio or information with at least a controller and a device included in said two or more of equipment, a device comprising:
at least one or more display components to configure an operation picture for operating the device; and
a plurality of control codes corresponding to said display component, wherein said device receives a few control codes out of said plurality of control codes via said transmission line and executes the function indicated by said display component.

13. In an AVC system formed by connecting via a transmission line at least two or more of equipment that handles any one or more of data on video, audio or information with at least a controller and a device included in said two or more of equipment, a controller characterized by:
reading a display component to configure an operation picture of a device and a control code corresponding to said display component from said device provided with a user interface and acting as an object to be controlled;
displaying said display component on a display screen; and
transmitting a control code corresponding to said display component and operation information of the user when said user operates said display component on said display screen.

14. In an AVC system formed by connecting via a transmission line at least two or more of equipment that handles anyone or more of data on video, audio or information with at least a controller and a device included in said two or more of equipment, a controller characterized by:
reading at least one or more display components to configure an operation screen of a device and a plurality of control codes corresponding to said display component from said device provided with a user interface and acting as an object to be controlled;
displaying said display component on a display screen; and
transmitting a few control codes out of said plurality of control codes corresponding to said display component and operation information of the user when said user operates said display component on said display screen.

15. In an AVC system formed by connecting via a transmission line at least two or more of equipment that handles any one or more of data on video, audio or information with at least a controller and a device included in said two or more of equipment, a controller characterized by:
reading at least one or more display components to configure an operation screen of a device and a plurality of control codes corresponding to said display component from said device provided with a user interface and acting as an object to be controlled;
displaying said display component on a display screen; and
transmitting a few control codes out of said plurality of control codes corresponding to said display component when the user operates said display component on said display screen.

16. In an AVC system formed by connecting via a transmission line at least two or more of equipment that handles any one or more of data on video, audio or information with at least a controller and a device included in said two or more of equipment, a device characterized by:
having an identification information memeory area to store identifying information, whereby said device is identified by the user;
receiving data of a display component, whereby the user identifies designated equipment; and
storing data of said display component as said identifying information in said identification information memeory area.

17. In an AVC system formed by connecting via a transmission line at least two or more of equipment that handles any one or more of data on video, audio or information with at least a controller and a device included in said two or more of equipment, a device characterized by:
having an identification information memeory area to store display components of a plurality of kinds, whereby the device is to be identified by the user, and a flag to identify said display component of a plurality of kinds selected by the user;
receiving the flag of said display component selected by the user; and storing the flag of said display component in said identifying information memory area.

18. In an AVC system formed by connecting via a transmission line at least two or more of equipment that handles any one or more of data on video; audio or information with at least a controller and a device included in said two or more of equipment, a network control system comprising a controller with a user interface and a device acting as an object to be controlled, at least both of which are included in said two or more of equipment, wherein:
said device has a plurality of operation picture data for controlling the device; and
said controller reads said operation picture data from said device and displays an operation picture prepared by using said operation picture data by switching between operation pictures according to the operation of the user.

19. In an AVC system formed by connecting via a transmission line at least two or more of equipment that handles any one or more of data on video, audio or information with at least a controller and a device included in said two or more of equipment, a controller characterized by:
reading a plurality of operation picture data from the device provided with a user interface and acting as an object to be controlled;
producing a selection picture for selecting said plurality of operation screens from said operation picture data; and
displaying said selection picture.

20. In an AVC system formed by connecting via a transmission line at least two or more of equipment that handles any one or more of data on video, audio or information, a network control system comprising
a controller with a user interface; and
a device acting as an object to be controlled, with at least said controller and device included in said two or more of equipment, wherein:
said device has a host memory area to store host's identification data at the present time; and
said controller writes said controller's identification data in said host memory area at the time of controlling said device and gains the right to use.

21. In an AVC system formed by connecting via a transmission line at least two or more of equipment that handles any one or more of data on video, audio or information, a network control system comprising:
a controller with a user interface; and
a device acting as an object to be controlled, with at least said controller and device included in said two or more of equipment, wherein:
said device has a host memory area to store host's identification data at the present time;
said controller transmits said controller's identification data to said device at the time of controlling said device; and
said device writes said transmitted identification data in said host memory area, thereby providing said controller with the right to use.

22. The network control system according to Claim 20, wherein the controller writes said controller's identification data in the host memory area at the time of controlling said device and also writes a flag indicating priorities of the right to use therein to gain the right to use.

23. In an AVC system formed by connecting via a transmission line at least two or more of equipment that handles any one or more of data on video, audio or information with at least a controller and a device included in said two or more of equipment, a device characterized by:
having a host memory area to store host's identification data at the present time; and
providing only a controller of the identification data, which is written in said host memory area, with the right to use.

24. The device according to Claim 23, wherein whether the controller of the identification data stored in the host memory area exists on the network or not is confirmed in a predetermined period after the time when the control code was accepted most recently.

25. The device according to Claim 23, wherein the contents of the host memory area are made invalid in a predetermined period after the control code was accepted most recently.

26. The device according to Claim 23, wherein the contents of the host memory area are made invalid in case where nothing is written in said host memory area from the controller in a predetermined period after the time when a status alteration in the transmission line occurred

27. In an AVC system formed by connecting via a transmission line at least two or more of equipment that handles anyone or more of data on video, audio or information with at least a controller and a device included in said two or more of equipment, a controller characterized by writing an identification data of said controller in a host memory area of said device to gain the right to use at the time of controlling said device.

28. The controller according to Claim 27, wherein in the case of continuing the right to use the device a controller's own identification data is rewritten in the host memory area of the device in a predetermined period after the time when a control code was sent to the device most recently.

29. The controller according to Claim 27, wherein in the case of continuing the right to use the device a controller's own identification data is rewritten in the host memory area of the device in a predetermined period after the time when a status alteration in the transmission line occurred.
